# DEMANDE DE BREVET EUROPEEN

(11) **EP 2 672 601 A1**
(43) Date de publication de la demande: **11.12.2013**
(21) Numéro de dépôt: 12290186.1
(22) Date de dépôt: 05.06.2012
(51) Int. Cl.: H02J 3/00, H02J 3/32

(54) **Réseau d'alimentation électrique lié à un système de transport**

(71) Demandeur: Siemens SAS, 93200 St. Denis (FR)
(72) Inventeur: Chattot, Eric, FR-92190 Meudon (FR); Cornetet, Valérie, FR-78460 Cheuvreuse (FR); Urien, Nicolas, FR-75013 Paris (FR); Cloutot, Laurent, CH-8956 Killwangen (CH)
(74) Mandataire: Fischer, Michael

(57) **Abrégé**

La présente invention décrit un réseau d'alimentation électrique comprenant au moins un point de connexion (PCO) avec un réseau électrique amont (REA) délivrant une puissance utile (Pf) à au moins une entrée d'un premier réseau électrique (RE1) d'alimentation d'un système de transports (ST) à mobilité électrique tels que trolley, tramway, métro, train, ou autres transports, le dit premier réseau électrique (RE1) présentant des fluctuations de puissance de crête en fonction des besoins énergétiques variables selon le trafic lié au système de transport, caractérisé en ce que :
- le premier réseau électrique (RE1) comprend au moins une sortie de puissance (SP) apte à distribuer de l'énergie, notamment récupérée du système de transport (ST) et du réseau électrique (REA) en amont, à au moins un deuxième réseau électrique (RE2) permettant une alimentation d'énergie de points de consommation électrique (Sc),
- au moins une unité de supervision (UC) contrôle la distribution d'énergie de ladite sortie de puissance (SP) dès lors qu'au moins la puissance crête requise par le premier système de transports (ST) est inférieure à la puissance utile (Pf) disponible en amont.

## Description

La présente invention concerne un réseau d'alimentation électrique, notamment lié à un système de transport selon le préambule de la revendication 1.

Un système de transport urbain de masse à mobilité électrique tels que trolley, tramway, métro, train, ou autres transports de type guidés ou conduits, se caractérise par un fonctionnement très intermittent avec des pics de consommation électrique aux heures de pointes et des périodes creuses pour lesquelles le réseau d'alimentation électrique dudit système de transport est peu sollicité. Outre des divergences importantes entre les pics et les creux de consommation, le réseau d'alimentation électrique doit toutefois nécessairement être dimensionné pour répondre à une capacité maximum du système de transport afin de satisfaire les contraintes d'exploitation en permanence.

La capacité du réseau électrique du système de transport est soit prédictible, par la connaissance de tables horaires, soit mesurable en temps réel par le biais de dispositifs de mesure lié au trafic dans le système de transport.

A ce jour, les exploitants de système de transport visent à minimiser les coûts énergétiques qui se traduisent par deux facteurs : abonnement et consommation. L'abonnement dépend fortement de la capacité maximum requise d'un réseau d'alimentation électrique en amont du réseau électrique propre au système de transport. La maîtrise de la puissance appelée comme de la consommation peut se faire par de la régulation de trafic, de la récupération d'énergie de freinage de véhicules. D'autres méthodes visent à stocker un excédent énergétique, par exemple en heure creuse, par exemple dans des batteries ou des super-capacités, afin de restituer cette énergie stockée lors de la phase de traction et aux heures de pointe. Par ce biais, l'exploitant du système de transport peut sensiblement optimiser une gestion énergétique et donc diminuer le coût de son contrat avec un distributeur d'énergie électrique en amont.

Enfin, sur le modèle connu des « Smart Grid », il est aujourd'hui possible que des distributeurs d'énergie tels qu'EDF en France, puissent dans certaines conditions, redistribuer des excédents d'énergie provenant d'un réseau local de base vers des consommateurs externes au dit réseau local. Ce principe contractuel est appliqué par exemple pour des installations privées de collecteurs solaires potentiellement en excédent énergétique. Dans le cas d'un système de transport, la puissance excédentaire du réseau d'alimentation électrique dudit système est toutefois de par sa nature intermittente et d'intensité fortement variable, difficilement absorbable par un distributeur d'énergie tel qu'EDF. Il est préférable pour l'exploitant de privilégier une réutilisation propre au système de transport.

Un but de la présente invention est de proposer un réseau d'alimentation électrique apte à permettre une gestion plus économique d'un réseau électrique lié à un système de transport, en assurant à un exploitant dudit système qu'il peut contrôler de manière autonome cette gestion en raison de sa connaissance directe de l'état du système de transport.

Enfin, un système de transport comprend bien entendu des véhicules, mais aussi des équipements, stations, et autres périphériques desservant ledit système. Le but de la présente invention précédemment énoncé s'étend ainsi aussi à la gestion plus économique de réseau électrique alimentant au moins ces équipements, stations et autres périphériques, également en assurant à un exploitant dudit système qu'il peut contrôler de manière autonome cette gestion en raison de sa connaissance directe de l'état du système de transport et desdits équipements.

En ce sens, la présente invention propose donc un réseau d'alimentation électrique décrit par les caractéristiques de la revendication 1.

A partir d'un réseau d'alimentation électrique comprenant au moins un point de connexion avec un réseau électrique amont (tel qu'un réseau de distribution électrique classique comme celui d'EDF) délivrant une puissance utile à au moins une entrée d'un premier réseau électrique d'alimentation d'un système de transports à mobilité électrique tels que trolley, tramway, métro, train, ou autres transports gérés par un exploitant, le dit premier réseau électrique présentant des fluctuations de puissance de crête en fonction des besoins énergétiques variables selon le trafic lié au système de transport, l'invention prévoit que ledit réseau électrique se caractérise en ce que :
- le premier réseau électrique comprend au moins une sortie de puissance apte à distribuer de l'énergie, notamment récupérée du système de transport (récupération, stockage, etc.) et du réseau électrique en amont (par exemple et surtout en phase d'excédent d'énergie), à au moins un deuxième réseau électrique permettant une alimentation d'énergie de points de consommation électrique tels que en particulier des équipements, stations et autres périphériques au dit système de transport et communément aussi nommés « consommateurs » par la suite,
- au moins une unité de supervision contrôle sous gouverne de l'exploitant la distribution d'énergie de ladite sortie de puissance dès lors qu'au moins la puissance crête requise par le premier système de transports est inférieure à la puissance utile disponible en amont.

Un avantage considérable du réseau selon l'invention est que l'exploitant du système de transport peut au moyen de l'unité de supervision prenant en compte les dimensionnements énergétique requis dudit système, redistribuer des excédents d'énergie vers des consommateurs divers, en particulier hors du premier réseau lié au système de transports, à l'exemple d'un robinet que l'on ouvre ou l'on ferme. Contractuellement, l'exploitant conserve un contrat avec le distributeur du réseau électrique en amont assurant une capacité suffisante maximale d'alimentation énergétique qui généralement dépasse les besoins minimaux en énergie. Pendant les périodes où le réseau énergétique du système de transport est localement ou globalement excédentaire en énergie voire même pendant les périodes où la puissance appelée est inférieure à la capacité nominale du contrat, cette énergie peut être redistribuée voire revendue aux consommateurs et/ou à des moyens de stockage interne ou externe au premier réseau électrique.

Si l'exploitant modifie des conditions ou des paramètres de fonctionnement de son système de transport en fonction des besoins de transport, l'unité de supervision détecte que les besoins associés en énergie varient et adapte automatiquement la redistribution d'énergie via la sortie de puissance. Egalement, il est aussi aisément possible à l'exploitant d'adapter manuellement des critères de commande de l'unité de supervision. Ceci peut se faire en fonction de besoins ciblés sur son système de transport voire du second réseau électrique si un apport énergétique d'un consommateur devait être rendu prioritaire.

Tous ces aspects rendent ainsi l'exploitant du système de transport autonome pour gérer le plus économiquement ses besoins effectifs en énergie à garantir et la redistribution excédentaire d'énergie D'un point de vue contractuel, si l'exploitant utilise effectivement 70% des capacités maximales du réseau distributeur d'énergie, il peut en complément de la redistribution de ses excédents, utiliser les 30% de capacité restante pour complémenter la livraison à des tiers consommateurs.

Un ensemble de sous-revendications présente des avantages de l'invention, eux-mêmes étant décrits au moyen d'exemples de réalisation et d'application étant fournis à l'aide de figures décrites :
- Figure 1: Exemple de réalisation d'un réseau d'alimentation électrique selon l'invention,
- Figure 2: Schéma de principe d'un réseau d'alimentation électrique selon l'invention avec un consommateur annexe au système de transport,
- Figure 3: Schéma de principe selon figure 2 avec un moyen de stockage supplémentaire,
- Figure 4: Schéma de principe selon figure 3 avec des consommateurs supplémentaires et leurs alimentations de base/subsidiaire, deux sources de puissance utile délivrée et deux sorties de puissance,
- Figure 5: Schéma de principe selon figure 2 avec deux sources de puissance utile délivrée à deux systèmes de transport couplés à une sortie de puissance.

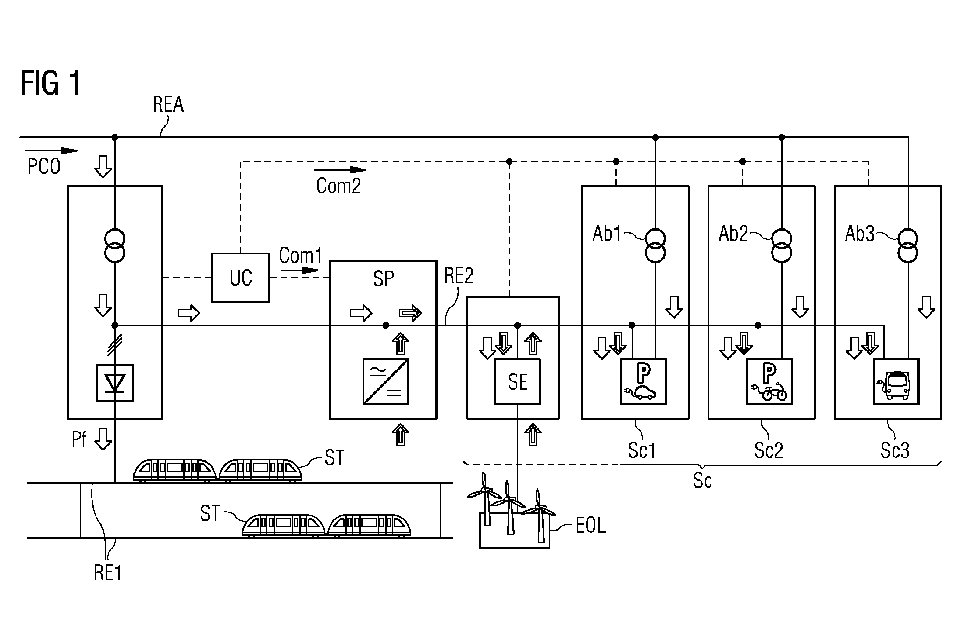

**Figure 1** présente un exemple de réalisation d'un réseau d'alimentation électrique selon l'invention comprenant au moins un point de connexion (PCO) avec un réseau électrique amont (REA) délivrant une puissance utile (Pf) à au moins une entrée d'un premier réseau électrique (RE1) d'alimentation d'un système de transports (ST) à mobilité électrique tels que trolley, tramway, métro, train, ou autres transports, le dit premier réseau électrique (RE1) présentant des fluctuations de puissance de crête en fonction des besoins énergétiques variables selon le trafic lié au système de transport.

Le réseau d'alimentation électrique selon l'invention se caractérise en ce que :
- le premier réseau électrique (RE1) comprend au moins une sortie de puissance (SP) apte à distribuer de l'énergie, notamment récupérée du système de transport (ST) et du réseau électrique (REA) en amont, à au moins un deuxième réseau électrique (RE2) permettant une alimentation d'énergie de points de consommation électrique communément nommé « consommateurs » (Sc, SE, Sc1 Sc2, Sc3...),
- au moins une unité de supervision (UC) contrôle la distribution d'énergie de ladite sortie de puissance (SP) dès lors qu'au moins la puissance crête requise par le premier système de transports (ST) est inférieure à la puissance utile (Pf) disponible en amont depuis le réseau (REA).

Sous gouverne de l'exploitant du système de transport, l'unité de supervision (UC) commande, de manière dynamique ou selon un schéma préétabli, au moins une distribution d'énergie via la sortie de puissance (SP), assurant ainsi un pilotage d'une alimentation générale (Com1) ou individuelle (Com2) à au moins un des points de consommation électrique (Sc1, Sc2, Sc3) par alimentation directe ou via un moyen de stockage intermédiaire (SE) qui peut être assimilé à un consommateur réversible (stocke et délivre de l'énergie sous requête de l'unité de supervision ou/et des besoins d'autres consommateurs). Le moyen de stockage (SE) peut aussi être alimenté par une source à énergie renouvelable ou/et intermittente (EOL) telle que le parc d'éolienne indiqué en figure 1 contribuant à apporter une énergie complémentaire aux excédents provenant du premier réseau électrique vers le moyen de stockage (SE). Ainsi, en récupérant, en amont, dans le moyen de stockage (SE) tous les apports d'énergie renouvelable/intermittente et tous les excédents « sous-utilisés » d'énergie, il est possible d'obtenir une quasi continuité d'alimentation électrique aux consommateurs (Sc1, Sc2, Sc3) en aval du moyen de stockage (SE), de façon à éviter d'utiliser des alimentations de base (Ab1, Ab2, Ab3) pour ces consommateurs, les dites alimentations de base étant elles-mêmes liées à des surcoûts contractuels/physique d'un distributeur d'énergie. Le réseau d'alimentation électrique selon l'invention adopte donc un mode préféré de pilotage d'alimentation générale (Com1) ou individuelle (Com2) en maximisant un apport d'énergie vers les consommateurs issu de la sortie de puissance (SP) ou du moyen de stockage (SE) afin de minimiser des apports d'énergie complémentaires externes au deuxième réseau électriques (RE2).

En fonction du type de stockage souhaité ou des besoins des consommateurs en aval du stockage, le moyen de stockage (SE) peut avantageusement comprendre un accumulateur tel qu'une batterie, un super-condensateur, une roue d'inertie ou un moyen hybride d'accumulations électriques.

Un des points (Sc1, Sc2, Sc3) de consommation électrique peut être une station de recharge pour accumulateurs, notamment des accumulateurs de type embarqués ou/et amovibles de moyens de transport ou une station de recharge pour un véhicule routier électrique comme un vélo (Sc2), un scooter, une voiture (Sc1), un utilitaire ou un bus (Sc3). Par ces exemples, le réseau d'alimentation électrique selon l'invention permet fort avantageusement donc à partir d'excédents entièrement récupérables d'énergie du premier réseau (RE1) lié au système de transport (ST) de permettre une alimentation quasi permanente en énergie à d'autres systèmes ou parcs de divers transports électriques en périphérie du système de transport (ST). Egalement, les points de consommation électrique peuvent être des équipements divers et variés tels un tapis roulant, un escalator, ou d'autres équipements électriques (porte, signalisation, climatisation, etc.), notamment de station de système de transport.

D'une manière flexible, l'unité de supervision (UC) peut être soit centralisée à un poste de commande central, soit distribuée sur le premier réseau électrique (RE1) en fonction de points de détection d'excédents d'énergie récupérable près de point(s) de connexion au réseau(x) amont (REA).

Une sortie de puissance (SP) préférée peut comprendre un simple transformateur en sous-station du système de transport permettant une conversion continu/alternatif entre le premier et le deuxième réseau (RE1, RE2). La sortie de puissance est bien entendu couplée ou du moins commandée par l'unité de supervision (UC), notamment afin de permettre de réguler le flux d'énergie vers le deuxième réseau électrique (RE2).

Le réseau d'alimentation électrique selon l'invention peut prévoir que le premier réseau électrique (RE1), le deuxième réseau électrique (RE2), un moyen de stockage (SE) ou/et les points de consommation électrique (Sc) sont couplés à des sources d'énergie intermittente et/ou renouvelable (EOL) dont l'énergie fournie est distribuée, sous commande de l'unité de supervision (UC). De cette façon, l'autonomie énergétique du réseau selon l'invention est encore accrue en fonction des besoins réels/effectifs des consommateurs.

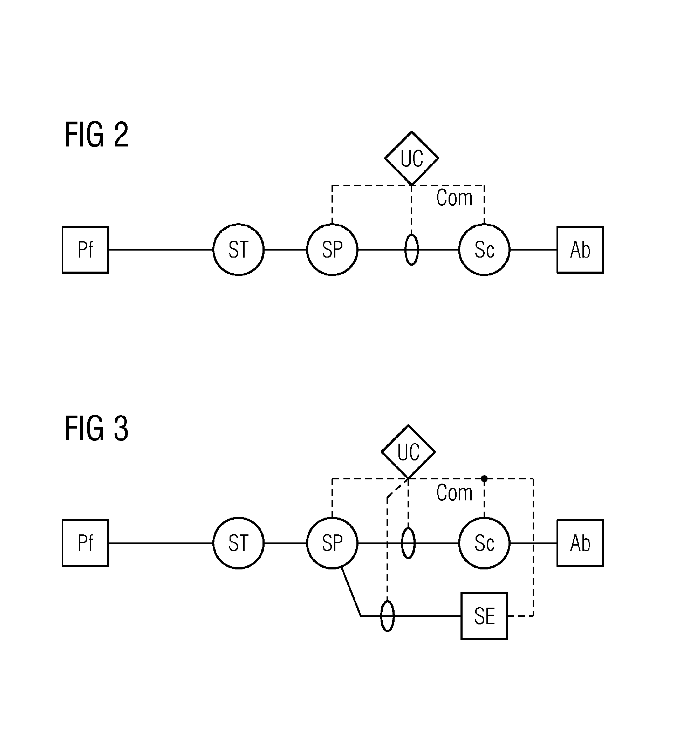

**Figure 2** présente un schéma de principe de base d'un réseau d'alimentation électrique selon l'invention (tel celui de figure 1) avec un simple consommateur (Sc) annexe au système de transport (ST). Le système de transport (ST) recevant une puissance utile (Pf) et disposant d'une capacité de puissance installée excédentaire au besoin du dit système de transport et/ou générant une énergie excédentaire pouvant fournir une puissance via la sortie de puissance (SP) commandée (Com) par le biais d'une unité de supervision (UC) à un point de consommation (Sc) en complément ou idéalement en lieu et place d'une alimentation de base (Ab) indépendante dudit point de consommation.

**Figure 3** présente un autre schéma de principe selon figure 2 avec un moyen de stockage supplémentaire (SE). Ici, le moyen de stockage est commandé (Com) par l'unité de supervision (UC) soit identiquement au consommateur (Sc) soit individuellement, et parallèlement au consommateur (Sc), du moins pour une phase de charge en énergie provenant d'une capacité de puissance installée excédentaire au besoin du dit système de transport (ST). De manière réversible, l'unité de supervision (UC) peut aussi commander une décharge du moyen de stockage (SE), le rendant ainsi lui-même source d'énergie de l'autre consommateur (Sc) afin de le rendre indépendant à une autre source d'énergie externe (Ab) en amont du deuxième (et premier) réseau électrique via la sortie de puissance (SP).

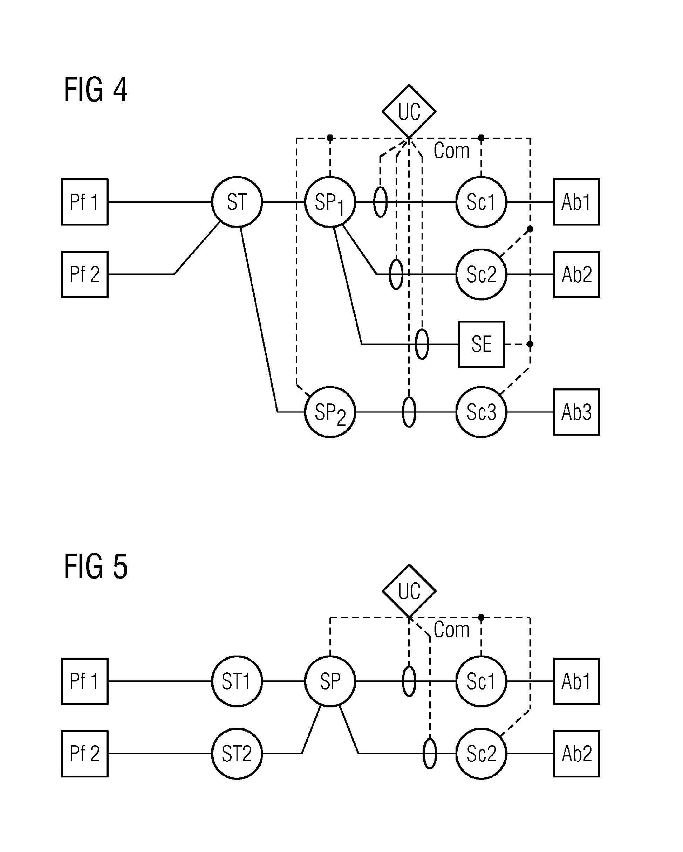

**Figure 4** présente un schéma de principe selon figure 3 avec des consommateurs supplémentaires (Sc1, SC2, Sc3) et leurs alimentations de base/subsidiaire (Ab1, Ab2, Ab3), deux points de connexion en tant que sources (Pf1, Pf2) de puissance utile délivrée au système de transport (ST) comportant deux sorties de puissance (SP1, SP2). En comparaison avec la figure 3, la sortie de puissance (SP) se compose de plusieurs points de distribution (SP1, SP2), étant en particulier couplés à au moins un point de consommation électrique (Sc1, Sc2, Sc3) ou/et un moyen de stockage (SE).

**Figure 5** présente enfin un schéma de principe selon figure 2 avec deux points de connexion en tant que sources (Pf1, Pf2) de puissance utile respectivement délivrée à chacun de deux systèmes de transport (ST1, ST2) couplés à une sortie de puissance (SP). Par ce biais, un double excédent d'énergie peut être centralement récupéré et redistribué vers au moins un des deux consommateurs (Sc1, Sc2). Plus généralement, une unique sortie de puissance (SP) peut être couplée électriquement à plusieurs systèmes de transports (ST, ST1, ST2...) à mobilité électrique, les dits systèmes de transports pouvant être chacun individuellement alimentés par une puissance utile (Pf1, Pf2...). Le réseau d'alimentation électrique selon l'invention peut donc être étendu à plusieurs systèmes de transport ayant idéalement des équipements ou stations communes ou plus généralement étant avoisinés.

Dans le but d'améliorer la gestion d'énergie et par extension aux exemples des figures concernées, un point de consommation électrique ou de stockage (Sc, Sc1, Sc2, Sc3, SE) peut ainsi être couplé par voie directe sinon indirecte à plusieurs points de distribution d'énergie tels que :
- une sortie de puissance (SP, SP1, SP2),
- une sortie d'un autre moyen de stockage tel qu'un moyen de stockage associé à une source intermittente d'énergie (EOL),
- une sortie d'une alimentation de base (Ab, Ab1, Ab2, Ab3)
- ou/et une sortie d'une source à énergie intermittente ou/et renouvelable (EOL).

Enfin, un mode de réalisation préféré du réseau l'alimentation électrique selon l'invention est aussi obtenu lorsqu'une alimentation de base (Ab, Ab1, Ab2, Ab3) d'un point de consommation est une alimentation subsidiaire à une ou des sources d'énergie intermittentes ou renouvelables alimentant le point de consommation. Idéalement sous ce mode, en amont du deuxième réseau, un excédent d'énergie de l'alimentation de base (Ab, Ab1, Ab2, Ab3) est redistribué vers un moyen de stockage (SE), en cas d'apport énergétique de source d'énergie intermittente ou renouvelables. Sous cet angle, et selon l'exemple de la figure 1, ceci signifie qu'un réseau distributeur alimentant un système de transport « consommateur » (Sc3) de bus pourrait reverser de l'énergie excédentaire vers le moyen de stockage (SE) s'il y a excédent sur le réseau électrique associé au système de transport « consommateur » (Sc3) de bus, en raison d'une suffisance d'alimentation par une source d'énergie intermittente ou renouvelable propre audit système de transport de bus (par exemple des capteurs solaires en station).

## Revendications

1. Réseau d'alimentation électrique comprenant au moins un point de connexion (PCO) avec un réseau électrique amont (REA) délivrant une puissance utile (Pf) à au moins une entrée d'un premier réseau électrique (RE1) d'alimentation d'un système de transports (ST) à mobilité électrique tels que trolley, tramway, métro, train, ou autres transports, le dit premier réseau électrique (RE1) présentant des fluctuations de puissance de crête en fonction des besoins énergétiques variables selon le trafic lié au système de transport,
**caractérisé en ce que** :
- le premier réseau électrique (RE1) comprend au moins une sortie de puissance (SP) apte à distribuer de l'énergie, notamment récupérée du système de transport (ST) et du réseau électrique (REA) en amont, à au moins un deuxième réseau électrique (RE2) permettant une alimentation d'énergie de points de consommation électrique (Sc),
- au moins une unité de supervision (UC) contrôle la distribution d'énergie de ladite sortie de puissance (SP) dès lors qu'au moins la puissance crête requise par le premier système de transports (ST) est inférieure à la puissance utile (Pf) disponible en amont.

2. Réseau selon revendication 1, pour lequel l'unité de supervision (UC) commande, de manière dynamique ou selon un schéma préétabli, au moins une distribution d'énergie via la sortie de puissance (SP), assurant ainsi un pilotage d'une alimentation générale (Com1) ou individuelle (Com2) à au moins un des points de consommation électrique (SC1, SC2, SC3) par alimentation directe ou via un moyen de stockage intermédiaire (SE).

3. Réseau selon revendication 2, pour lequel le moyen de stockage (SE) comprend un accumulateur tel qu'une batterie, un super-condensateur, une roue d'inertie ou un moyen hybride d'accumulations électriques.

4. Réseau selon une des revendications 1 à 3, pour lequel un des points de consommation électrique est une station de recharge pour accumulateurs, notamment des accumulateurs de type embarqués ou/et amovibles de moyens de transport ou une station de recharge pour un véhicule routier électrique comme un vélo, un scooter, une voiture, un utilitaire ou un bus.

5. Réseau selon une des revendications 1 à 4, pour lequel les points de consommation électrique sont un tapis roulant, un escalator, ou d'autres équipements électriques, notamment de station de système de transport.

6. Réseau selon une des revendications 1 à 5, pour lequel l'unité de supervision est soit centralisée à un poste de commande central, soit distribuée sur le premier réseau électrique.

7. Réseau selon une des revendications 1 à 6, pour lequel le premier réseau électrique (RE1), le deuxième réseau électrique (RE2), un moyen de stockage (SE) ou/et les points de consommation électrique (Sc) sont couplés à des sources d'énergie intermittente et/ou renouvelable (EOL) dont l'énergie fournie est distribuée, sous commande de l'unité de supervision (UC).

8. Réseau selon une des revendications là 7, pour lequel une sortie de puissance (SP) est couplée électriquement à plusieurs systèmes de transports (ST, ST1, ST2) à mobilité électrique, les dits systèmes de transports pouvant être chacun individuellement alimentés par une puissance utile (Pf1, Pf2).

9. Réseau selon une des revendications 1 à 8, pour lequel la sortie de puissance (SP) se compose de plusieurs points de distribution (SP1, SP2), étant en particulier couplés à au moins un point de consommation électrique (Sc1, Sc2, Sc3) ou/et un moyen de stockage (SE).

10. Réseau selon une des revendications 1 à 9, pour lequel un point de consommation électrique ou de stockage (Sc, Sc1, Sc2, Sc3, SE) est couplé par voie directe sinon indirecte à plusieurs points de distribution d'énergie tels que :
- une sortie de puissance (SP, SP1, SP2),
- une sortie d'un autre moyen de stockage tel qu'un moyen de stockage associé à une source intermittente d'énergie (EOL),
- une sortie d'une alimentation de base (Ab, Ab1, Ab2, Ab3)
- ou/et une sortie d'une source à énergie intermittente ou/et renouvelable (EOL).

11. Réseau selon revendication 10, pour lequel l'alimentation de base (Ab, Ab1, Ab2, Ab3) est une alimentation subsidiaire à des sources d'énergie intermittentes.

12. Réseau selon revendication 11, pour lequel un excédent d'énergie de l'alimentation de base (Ab, Ab1, Ab2, Ab3) est redistribué vers un moyen de stockage (SE), en cas d'apport énergétique de source d'énergie intermittente.
